# EUROPÄISCHE PATENTSCHRIFT

(11) **EP 1 000 648 B1**
(45) Veröffentlichungstag und Bekanntmachung des Hinweises auf die Patenterteilung: **26.05.2004**
(21) Anmeldenummer: 98121329.1
(22) Anmeldetag: 10.11.1998
(51) Int. Cl.: B01D 29/11, B01D 35/16, B01D 37/02

(54) **Kerzenfilter und Verfahren zur Stabilisierung von Getränken sowie zum Regenerieren von Stabilisiermitteln**
Candle filter and process for the stabilization of beverages and for the regeneration of stabilizers
Filtre à bougie et procédé pour la stabilisation de boissons et pour la regénération de stabilisateurs

(43) Veröffentlichungstag der Anmeldung: 17.05.2000
(73) Patentinhaber: Filtrox AG, 9000 St. Gallen (CH)
(72) Erfinder: Meier, Ernst, 9212 Arnegg (CH); Hilber, Andreas, 9244 Niederuzwil (CH)
(74) Vertreter: Hepp, Dieter

(56) Entgegenhaltungen:
- EP-A- 0 715 875
- WO-A-93/11186
- CH-A- 658 401
- DE-C- 821 336
- DE-C- 3 638 250
- JP-A- 5 076 710

## Beschreibung

Die Erfindung betrifft einen Kerzenfilter und ein Verfahren für die Stabilisierung von Getränken sowie ein Verfahren zum Regenerieren von Stabilisiermitteln mit den Merkmalen des Oberbegriffs der unabhängigen Patentansprüche.

Kerzenfilter mit zylinderförmigen, hängend angeordneten Filterelementen sind seit langem bekannt und werden zusammen mit Filterhilfsmitteln in der Anschwemmfiltration von Getränken eingesetzt. Solche Kerzenfilter sind beispielsweise in EP-B-203 206, DE-A-28 47 947 oder CH-A-481 669 beschrieben.

Die Anschwemmfiltration zum Zwecke der Stabilisierung von Getränken ist ebenfalls bekannt. Dabei werden Stabilisiermittel anstelle von oder im Gemisch mit Filterhilfsmitteln eingesetzt. Ein solches Verfahren ist beispielsweise in EP-B-325 188 beschrieben. Die Regenerierung der Stabilisiermittel ist beispielsweise aus US-A-3,878,310 oder EP-B-569 568 bekannt. Bei der Stabilisierung tritt durch Kontakt zwischen dem Getränk und dem Stabilisiermittel eine Anlagerung und/oder chemische Reaktion ein. Durch diese Reaktion werden die Stabilisiermittel verbraucht und müssen anschliessend regeneriert werden.

Beim Kerzenfilter wird in der zu filtrierenden bzw. zu stabilisierenden Flüssigkeit suspendierte Stabilisiermittel-Teilchen in einem Unfiltratraum unter Flüssigkeitsdruck an Filterelemente angeschwemmt. Dabei wird eine Schicht aus Stabilisiermittel aufgebaut. Der Aufbau der Filterschicht wird durch die gewollte Rückhaltung der Stabilisiermittel-Teilchen auf der nur für die Flüssigkeit durchlässigen Oberfläche der Filterelemente hervorgerufen.

Das Regenerieren von Filterhilfsmitteln in solchen Kerzenfiltern ist bekannt. Zum Regenerieren von Stabilisiermitteln (beispielsweise PVPP) wurden solche Kerzenfilter bisher aber nicht angewandt, da das pulverartige Stabilisiermittel sich nicht oder nur schlecht an den Oberflächen der hängend angeordneten Filterelementen halten lässt.

Zum Regenerieren von Stabilisiermitteln sind Siebfilter mit horizontalen, scheibenförmigen Filterelementen bekannt. Solche Siebfilter bestehen aus etwa zylindrischen Behältern, in dessen Innern auf einer zentralen Welle Filterelemente angeordnet sind. Die Filterelemente weisen auf der Oberseite ein durchlässiges Gewebe oder eine Membran auf. Die Flüssigkeit tritt dann von oben in das Innere der Filterelemente hinein und wird von dort in die zentrale Welle geleitet. Von der Welle wird die Flüssigkeit aus sämtlichen Filterelementen gesammelt und dem Auslauf zugeführt.

Die Stabilisierung des Getränks erfolgt durch Anschwemmung der Stabilisiermittel-Teilchen an der Oberfläche der Filterelemente. Durch Zirkulation wird das zu stabilisierende Getränk in Kontakt mit dem Stabilisiermittel gebracht. Nach Beendigung der Stabilisierung wird das Getränk aus dem Filter entfernt und eine Flüssigkeit zum Regenerieren der verbrauchten Stabilisiermittel-Teilchen wird in den Filter eingeführt. Nach erfolgter Regenerierung muss zuerst das Regeneriermittel aus dem Filter entfernt werden. Anschliessend werden die Stabilisiermittel-Teilchen aus dem Filter entfernt.

Solche bekannten Siebfilter weisen benachbart zum Auslauf ein sogenanntes Restfilterelement auf. Während der Stabilisierung und der Regenerierung lagern sich aufgrund der Sedimentation auf der Oberfläche des Restfilterelementes immer Stabilisiermittel-Teilchen ab. Bei der Entleerung des Filters muss das Regeneriermittel durch das Restfilterelement entfernt werden. Aufgrund der abgelagerten Stabilisiermittel-Teilchen ist jedoch der Durchfluss für das Regeneriermittel begrenzt, so dass das Entleeren des Filters eine verhältnismässig grosse Zeitspanne in Anspruch nimmt.

Das Dokument JP-A-05076710 offenbart einen Filter für die Anschwemmfiltration, wobei ein Restfilterelement in einer flachen Bodenplatte vorgesehen ist.

Das Dokumente DE-C-821 336 offenbart eine Einrichtung zum Entleeren von Druckfiltern. Hierbei ist im Unterteil des Kesselfilters ein Filterboden oder ein Filterrohr vorgesehen.

Die Verwendung von Kerzenfiltern für die Regenerierung von Stabilisiermitteln ist zwar ebenfalls bekannt. Bei diesem Verfahren wird aber das Regeneriermittel nach erfolgter Regenerierung zusammen mit dem Stabilisiermittel in einen speziellen Behälter gebracht und dort getrennt. Erhöhter Zeitaufwand ist die Folge. US-A-5 384 034, EP-A-450 484 und DE-A-1 536 782 zeigen die Filtration von Restfiltermengen.

Es ist eine Aufgabe der vorliegenden Erfindung, die Nachteile des Bekannten zu vermeiden, insbesondere also einen Kerzenfilter zu schaffen, der wirtschaftlich für die Regenerierung von Stabilisiermitteln einsetzbar ist. Eine weitere Aufgabe der vorliegenden Erfindung besteht darin, ein Verfahren zum Regenerieren von Stabilisiermitteln bzw. ein Verfahren zum Stabilisieren von Getränken und zum nachfolgenden Regenerieren der Stabilisiermittel zu schaffen, welches ein rasches Regenerieren, insbesondere ein rasches Entleeren der regenerierten Stabilisiermittel-Teilchen aus dem Filter erlauben.

Erfindungsgemäss werden diese Aufgaben mit einem Kerzenfilter und mit einem Verfahren mit den Merkmalen des kennzeichnenden Teils der unabhängigen Patentansprüche gelöst.

Der Kerzenfilter für die Stabilisierung von Getränken und flüssigen Lebensmitteln und zur Regenerierung von auf Filterelementen angeschwemmten Stabilisiermitteln ist ausgestattet mit einem Unfiltratraum, einem Filtratraum, einer Lochplatte, welche den Unfiltratraum vom Filtratraum trennt, wobei die Lochplatte mit Öffnungen versehen ist, und mit durch die Öffnungen hängend im Unfiltratraum angeordneten Filterelementen, dadurch gekennzeichnet, dass im Unfiltratraum vollständig unterhalb der Filterelemente wenigstens ein Restfilterelement angeordnet ist, welches keine horizontalen Oberflächen aufweist, so dass sich keine Ablagerung von Stabilisiermittel-Teilchen auf der Oberfläche aufgrund von Anschwemmung und/oder Sedimentation ergeben kann, welche den Durchtritt des Regeneriermediums erschweren würde.

Der Unfiltratraum ist vom Filtratraum durch eine Lochplatte getrennt. Die Lochplatte weist Öffnungen auf, in denen Filterelemente hängend im Unfiltratraum angeordnet sind. Zur Behandlung (insbesondere zur Stabilisierung) wird ein Getränk in den Unfiltratraum eingeführt, fliesst durch an der Oberfläche der Filterelemente abgelagerte Stabilisiermittel-Teilchen und gelangt durch die Öffnungen in der Lochplatte in den Filtratraum.

Zur Stabilisierung wird das Getränk durch den Kerzenfilter gefördert und gerät dabei in Kontakt mit den an der Oberfläche der Filterelemente angeschwemmten Stabilisiermittel-Teilchen. Zusätzlich werden laufend geringe Mengen an Stabilisiermitteln in das vorfiltrierte Getränk dosiert.

Zur Regenerierung der Stabilisiermittel-Teilchen wird ein Reinigungsmedium in den Kerzenfilter eingeführt (insbesondere eine Lauge). Durch Kontakt mit der Reinigungsflüssigkeit werden die Stabilisiermittel-Teilchen regeneriert. Gegebenenfalls kann nach der Lauge eine Reinigung der Stabilisiermittel-Teilchen und des Kerzenfilters durch Wasser erfolgen.

Nach Beendigung der Regenerierung muss die sich im Kerzenfilter befindende Flüssigkeit aus dem Filter entfernt werden.

Zu diesem Zweck ist im Unfiltratraum des Kerzenfilters unterhalb der Filterelemente ein Restfilterelement angeordnet. Weil das Restfilterelement nicht wie bei Anordnungen gemäss dem Stand der Technik als horizontales Sieb ausgebildet ist bzw. weil das Restfilterelement unterhalb der für die Filtration/Stabilisierung verwendeten Filterelemente angeordnet und deshalb nicht angeschwemmt wird, ergibt sich keine Ablagerung der Stabilisiermittel-Teilchen auf der Oberfläche des Restfilterelementes aufgrund von Anschwemmung und/oder Sedimentation.

Das Regeneriermedium kann deshalb rasch durch das Restfilterelement entfernt werden, ohne dass Stabilisiermittel-Teilchen auf der Oberfläche den Durchtritt des Reinigungsmediums erschweren würden.

In einem weiteren Aspekt der Erfindung ist das Restfilterelement deshalb derart ausgebildet und der Kerzenfilter derart betreibbar, dass das Restfilterelement einerseits während des Stabilisiervorgangs und des Regenerierungsvorgangs nicht angeschwemmt wird und dass sich andererseits keine Ablagerungen von Stabilisiermittel-Teilchen auf der Oberfläche des Restfilterelements ergeben.

Vorteilhaft ist das Restfilterelement in einer Öffnung in der Aussenwand des Unfiltratraumes des Kerzenfilters angeordnet. In einem besonders bevorzugten Ausführungsbeispiel besteht das Restfilterelement aus wenigstens einer Filterkerze. Die wenigstens eine Filterkerze kann horizontal angeordnet sein. Bei mehreren, horizontal angeordneten Filterkerzen sind diese vorteilhaft mit einem Stabilisator miteinander verbunden.

Ein Stabilisator kann beispielsweise durch ein Verbindungselement gebildet werden, das an den Enden der Filterelemente angeordnet ist.

Vorteilhaft ist der Kerzenfilter ausserdem in einem oberen Abschnitt des Unfiltratraumes mit einem Gaseinlass versehen. Der Gaseinlass dient zum Beaufschlagen des Unfiltratraumes mit einem Druck.

Damit kann während des Entleerens des Regeneriermittels durch das Restfilterelement ein Überdruck oberhalb des Niveaus des Regeneriermittels im oberen Abschnitt des Unfiltratraumes erzeugt werden. Die im oberen Abschnitt an den Filterelementen angeschwemmten Stabilisiermittel-Teilchen werden aufgrund der Druckdifferenz an den Filterelementen gehalten, auch wenn der Abschnitt oberhalb des Niveaus des Regeneriermittels liegt. Der Überdruck dient ausserdem dazu, das Regeneriermittel durch das Restfilterelement aus dem Unfiltratraum zu drücken.

Beim erfindungsgemässen Verfahren wird ausserdem gleichzeitig zum Beaufschlagen des Unfiltratraumes mit Druck der Filtratraum druckentlastet, so dass sich eine Druckdifferenz ergibt.

In einem ersten Zeitabschnitt kann bei dem erfindungsgemässen Verfahren während der Druckbeaufschlagung des oberen Abschnitts des Unfiltratraumes der Kreislauf des Regeneriermittels aufrechterhalten werden. Das Regeneriermittel fliesst dabei nur noch durch einen Teil der Filterelemente, der unterhalb des Niveaus des Regeneriermittels liegt. Der Kreislauf des Regeneriermittels wird unterbrochen, sobald das Flüssigkeitsniveau im Unfiltratraum unter einem vorbestimmbaren Wert absinkt oder sobald ein Gasdurchtritt beim Restfilterelement festgestellt wird.

Die Entleerung des Kerzenfilters über die Restfilterelemente erfolgt vorteilhaft mit einer grossen Leistung, vorzugsweise mit mehr als 20 hl/m²h, besonders vorteilhaft mehr als 100 hl/m²h.

Nach der Entleerung des Kerzenfilters aus dem Unfiltratraum wird das Stabilisiermittel vorzugsweise durch Rückspülen der Filterelemente von diesen entfernt und aus dem Unfiltratraum ausgetragen.

In einem weiteren Aspekt der Erfindung ist in einem Filter ein Restfilterelement vorgesehen, das im Betrieb nicht angeschwemmt bzw. durchspült wird und das derart angeordnet ist, dass keine Sedimentation von Stabilisiermittel-Teilchen erfolgt auf dem Restfilterelement. Wesentlich dabei ist also, dass keine horizontalen Oberflächen vorhanden sind und dass das Restfilterelement während dem Stabilisiervorgang bzw. der Regenerierung geschlossen bleibt.

Die Erfindung wird im folgenden in Ausführungsbeispielen und anhand der Zeichnungen näher erläutert. Es zeigen:
- Figur 1: eine schematische Darstellung eines erfindungsgemässen Kerzenfilters,
- Figuren 2a bis 2e: schematische Darstellungen der einzelnen Verfahrensschritte bei der Stabilisierung/Regenerierung,
- Figur 3: eine vergrösserte Darstellung eines Restfilterelementes und
- Figur 4: eine Draufsicht auf das Restfilterelement aus Figur 3.

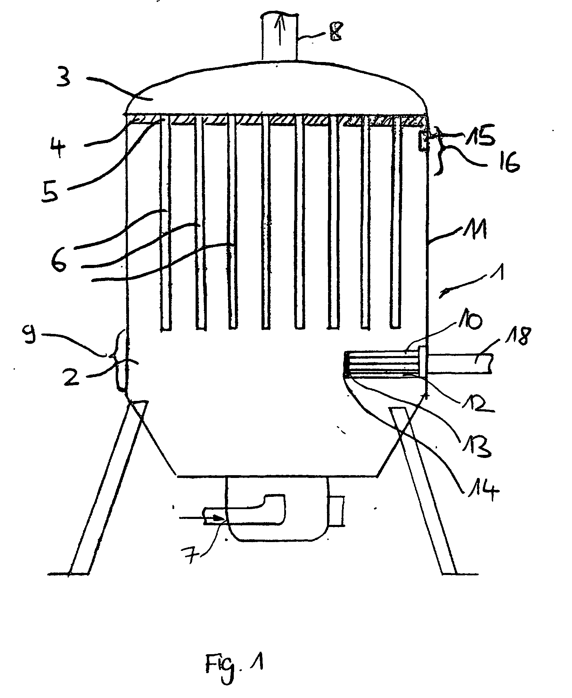

Figur 1 zeigt einen Kerzenfilter 1 mit den Merkmalen der Erfindung. Der Kerzenfilter 1 besteht im wesentlichen aus einem Unfiltratraum 2 und einem Filtratraum 3. Eine Lochplatte 4 trennt den Unfiltratraum 2 vom Filtratraum 3. Die Lochplatte 4 ist mit Öffnungen 5 versehen, in denen Filterelemente 6 angeordnet sind. Die Filterelemente 6 sind hängend im Unfiltratraum 2 angeordnet. Die Filterelemente 6 bestehen aus dem Fachmann bekannten Spaltfilterkerzen - es wären selbstverständlich auch andere bekannte Filterelemente einsetzbar.

Der Kerzenfilter 1 weist einen Einlauf 7 zum Einleiten einer Flüssigkeit in den Unfiltratraum 2 und einen Auslauf 8 zum Entfernen der filtrierten/stabilisierten Flüssigkeit aus dem Filtratraum 3 auf.

In einem unteren Bereich 9 unterhalb der Filterelemente 6 ist in der etwa zylindrischen Wand 11 des Unfiltratraumes 2 ein Restfilterelement 10 angeordnet. Das Restfilterelement 10 gemäss Ausführungsbeispiel besteht aus drei Filterkerzen 12, die sich von einer Öffnung in der Wand 11 horizontal nach innen in den Unfiltratraum 2 erstrecken. Die Filterelemente 12 des Restfilterelements 10 sind an ihrem Ende 13 mit einem Stabilisator 14 miteinander verbunden (siehe auch Figur 3). In einem oberen Bereich 16 des Unfiltratraumes 2 ist ein Gaseinlass 15 vorgesehen, der eine Druckbeaufschlagung des oberen Abschnittes 16 erlaubt.

Ein Anschluss 18 am Restfilterelement 10 erlaubt das Entfernen von Flüssigkeit durch das Restfilterelement 10.

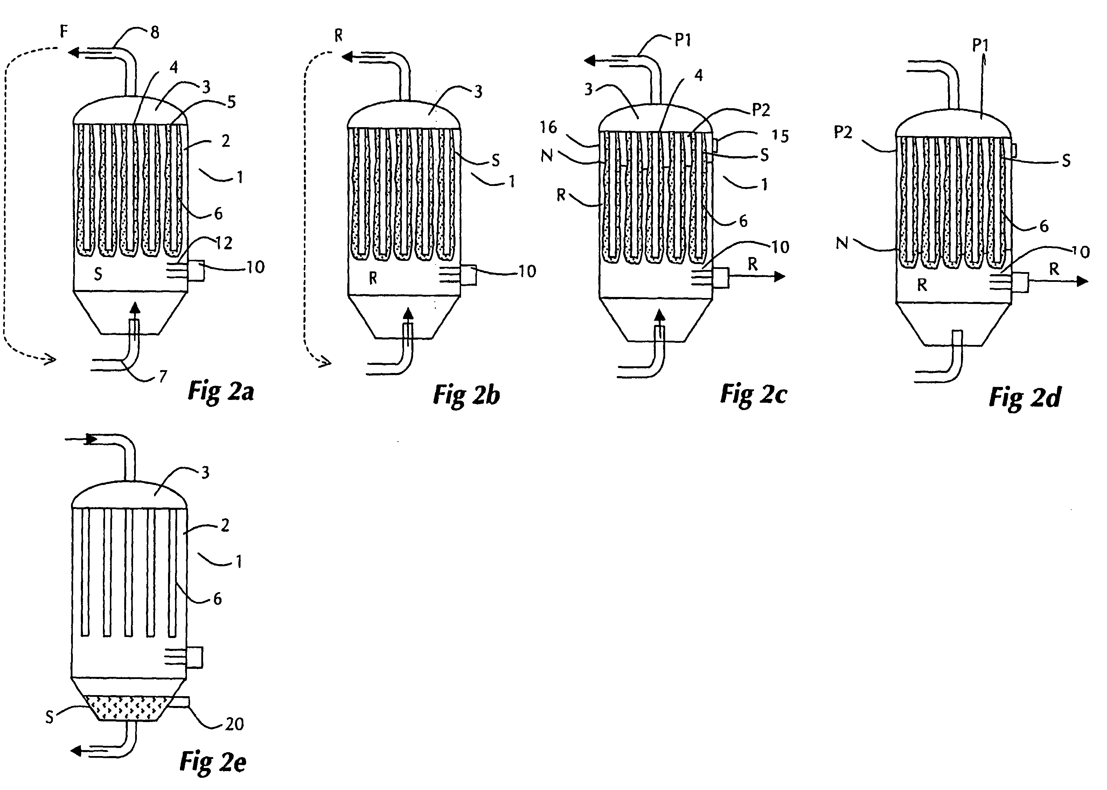

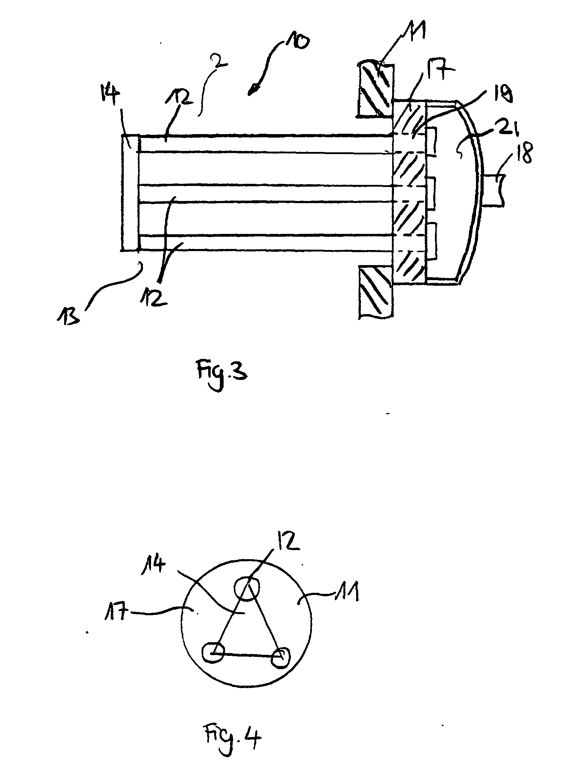

Figuren 2a bis 2e zeigen schematisch die einzelnen Schritte einer Stabilisierung/Regenerierung.

In Figur 2a wird das zu stabilisierende und vorgängig filtrierte Getränk F (das Filtrat) während einer bestimmten Zeitspanne (typischerweise 10 h bis 12 h) im Kreislauf durch den Kerzenfilter 1 gefördert. Ein im Filtrat F suspendiertes Stabilisiermittel S wird dabei an den Filterelementen 6 angeschwemmt. Durch Kontakt des Filtrates F mit den Stabilisiermittel-Teilchen S erfolgt Stabilisierung.

Das Filtrat F wird durch den Einlauf 7 in den Unfiltratraum 2, anschliessend durch die Oberfläche der Filterelemente 6 mit den Stabilisiermittel-Teilchen S und durch die Öffnungen 5 in der Lochplatte 4 in den Filtratraum 3 gefördert. Von da wird das Filtrat F durch den Auslauf 8 entnommen und wieder in den Unfiltratraum 2 gefördert.

Figur 2b zeigt die Behandlung der an den Filterelementen 6 angeschwemmten Stabilisiermittel-Teilchen S. Dazu wird das in Figur 2a gezeigte Filtrat aus dem Kerzenfilter 1 herausgedrückt und als behandeltes Filtrat gesammelt. Zum Herausdrücken wird ein Regeneriermittel R in den Unfiltratraum 2 eingeführt und ebenfalls im Kreislauf durch den Kerzenfilter 1 gefördert. Als Reinigungsmittel wird vorzugsweise Lauge, beispielsweise 1 bis 2 % NaOH-Lsg verwendet. Auf diese Weise werden an den Stabilisiermittel haftende Teilchen, beispielsweise Gerbstoffe oder Eiweisse aufgelöst und von dem Regeneriermittel R fortgetragen. Anschliessend kann das Regeneriermittel R entfernt werden und die Stabilisiermittel-Teilchen S bzw. der Kerzenfilter 1 mit Wasser oder Säure, z.B. 0,2 bis 1 % Phosphor- oder Salpetersäure auch heiss ca. 80 - 100°C gereinigt werden (Sanitation).

Bei Beendigung des Regenerierungsvorgangs wird das in der Wand 11 des Unfiltratraums 2 angeordnete Restfilterelement 10 geöffnet. Der obere Abschnitt 16 des Unfiltratraums 2 wird durch Beaufschlagung mit Druck durch einen Gaseinlass 15 einem erhöhten Druck ausgesetzt. Dabei wird eine Druckdifferenz zwischen dem Druck P2 im oberen Abschnitt 16 des Unfiltratraums 2 und dem Druck P1 im Filtratraum 3 erzeugt. Gleichzeitig kann der Filtratraum 3 druckentlastet werden.

Die Beaufschlagung des oberen Abschnitts 16 mit Druck hat zwei Effekte. Einerseits wird das Niveau N des Regeneriermittels im Unfiltratraum 2 nach unten gedrückt, wodurch das Regeneriermittel R durch das Restfilterelement 10 herausgedrückt wird. (Unter Regeneriermittel R wird hier sowohl das eigentliche Regeneriermittel, beispielsweise eine Lauge, wie auch nachfolgend verwendetes Wasser zum Reinigen verstanden.) Andererseits führt die Druckdifferenz zwischen Unfiltratraum 2 und Filtratraum 3 dazu, dass die Stabilisiermittel-Teilchen S auch im Abschnitt 16 des Unfiltratraums 2 an der Oberfläche der Filterelemente 6 gehalten werden. Deshalb lagern sich auch während des Entfernens des Regeneriermittels R aus dem Unfiltratraum 2 keine Stabilisiermittel-Teilchen S an der Oberfläche des Restfilterelementes 10 an. Die Entfernung des Regeneriermittels R kann deshalb mit hohen Durchtrittsleistungen erfolgen. Typischerweise kann der Behälter mit der erfindungsgemässen Lehre in fünf Minuten entleert werden.

In einem ersten Abschnitt wird die Zirkulation des Regeneriermittels R durch den Kerzenfilter 1 aufrechterhalten (siehe Figur 2c). Sobald das Niveau N unter einem vorbestimmten Wert sinkt, wird die Zirkulation gestoppt (Figur 2d). Kurz vor Beendigung der Entleerung des Regeneriermittels R liegen die Filterelemente 6 nur noch zu einem kleinen Teil im Regeneriermittel R. Bis zu diesem Zeitpunkt weisen die Oberflächen des Restfilterelementes 10 keine Stabilisiermittel-Teilchen auf.

Sobald das Regeneriermittel zum wesentlichen Teil durch das Restfilterelement 10 aus dem Unfiltratraum 2 entfernt worden ist, beginnt das Stabilisiermittel S von den Filterelementen 6 nach unten zu fallen. Die Entfernung des Stabilisiermittels kann durch Rückspülung mit einem Rückspülmedium vom Filtratraum 3 her beschleunigt erfolgen. Das im unteren Teil des Unfiltratraums 2 gesammelte Stabilisiermittel S wird anschliessend durch einen Anschluss 20 zum Trubaustrag entfernt werden.

Mit dem erfindungsgemässen Verfahren werden die Oberflächen des Restfilterelementes 10 nicht mit Stabilisiermittel-Teilchen verstopft, so dass ein rasches Ausstossen des Regeneriermittels R möglich ist.

Figur 3 zeigt eine vergrösserte Darstellung des vorzugsweise eingesetzten Restfilterelementes 10. Das Restfilterelement 10 besteht aus einer Lochplatte 17, die mit Öffnungen 19 versehen ist. In die Öffnungen 19 sind Filterkerzen 12 eingesetzt, die sich in das Innere des Unfiltratraumes 2 erstreken. Das Restfilterelement 10 ist mit der Lochplatte 17 in einer Öffnung in der Wand 11 des Unfiltratraumes 2 befestigt.

An ihrem Ende 13 sind die drei horizontal angeordneten Filterkerzen 12 mit einem Stabilisator 14 miteinander verbunden. Der Stabilisator 14 ist als dreieckige Platte (siehe Figur 4) ausgebildet.

Auf der Aussenseite der Lochplatte ist eine geschlossene Kammer 21 vorgesehen, die in einen Anschluss 18 mündet. Das Regeneriermittel R kann durch den Anschluss 18 entfernt werden.

Figur 4 zeigt eine Draufsicht auf das Restfilterelement 10. Drei Filterkerzen 12 sind gleichmässig an der Lochplatte 17 angeordnet und an ihrem Ende durch einen Stabilisator 14 miteinander verbunden.

## Patentansprüche

1. Kerzenfilter (1) für die Stabilisierung von Getränken und flüssigen Lebensmitteln und zur Regenerierung von auf Filterelementen (6) angeschwemmten Stabilisiermitteln (S), mit einem Unfiltratraum (2), einem Filtratraum (3), einer Lochplatte (4), welche den Unfiltratraum (2) vom Filtratraum (3) trennt, wobei die Lochplatte (4) mit Öffnungen (5) versehen ist, und mit durch die Öffnungen (5) hängend im Unfiltratraum (2) angeordneten Filterelementen (6), **dadurch gekennzeichnet, dass** im Unfiltratraum (2) vollständig unterhalb der Filterelemente (6) wenigstens ein Restfilterelement (10) angeordnet ist, welches keine horizontalen Oberflächen aufweist, so dass sich keine Ablagerung von Stabilisiermittel-Teilchen auf der Oberfläche aufgrund von Anschwemmung und/oder Sedimentation ergeben kann, welche den Durchtritt des Regeneriermediums erschweren würde.

2. Kerzenfilter nach Anspruch 1, **dadurch gekennzeichnet, dass** das Restfilterelement (10) in einer Wand (11) des Unfiltratraumes (2) angeordnet ist.

3. Kerzenfilter nach einem der Ansprüche 1 bis 2, **dadurch gekennzeichnet, dass** das Restfilterelement (10) wenigstens eine Filterkerze (12) aufweist.

4. Kerzenfilter nach Anspruch 3, **dadurch gekennzeichnet, dass** das Restfilterelement (10) aus wenigstens einer horizontal angeordneten Filterkerze (12) besteht, wobei bei mehreren Filterkerzen (12) diese vorzugsweise mit einem Stabilisator (14) miteinander verbunden sind.

5. Kerzenfilter nach Anspruch 4, **dadurch gekennzeichnet, dass** der Stabilisator (14) die Filterkerzen (12) an ihren Enden (13) miteinander verbindet.

6. Kerzenfilter nach einem der Ansprüche 1 bis 5, **dadurch gekennzeichnet, dass** wenigstens ein Gaseinlass (15) in einem oberen Abschnitt (16) des Unfiltratraumes (2) angeordnet ist, wobei der Gaseinlass (15) zum Beaufschlagen des Abschnitts (16) mit Druck dient.

7. Verfahren zum Stabilisieren von Getränken oder flüssigen Lebensmitteln, zum Regenerieren von Stabilisiermitteln und zum Entfernen der regenerierten Stabilisiermittel aus dem Unfiltratraum (2) eines Kerzenfilters (1) mit einem Filtratraum (3), mit hängend, etwa vertikal im Unfiltratraum (2) angeordneten Filterelementen (6) an deren Oberfläche die Stabilisiermittel (S) angeschwemmt sind und mit einem im Unfiltratraum (2) unterhalb der Filterelemente (6) angeordneten Restfilterelement (10), **dadurch gekennzeichnet, dass** zum Entfernen des Regeneriermittels (R) der Unfiltratraum (2) in einem oberen Abschnitt (16) mit einem im Verhältnis zum Druck im Filtratraum grösseren Druck beaufschlagt wird und dass das Regeneriermittel (R) durch das Restfilterelement (10) entfernt wird, wobei die Stabilisiermittel (S) aufgrund der Druckdifferenz zwischen dem Unfiltratraum (2) und dem Filtratraum (3) an der Oberfläche der Filterelemente (6) gehalten werden.

8. Verfahren nach Anspruch 7, **dadurch gekennzeichnet, dass** der Filtratraum (3) druckentlastet wird.

9. Verfahren nach einem der Ansprüche 7 oder 8, **dadurch gekennzeichnet, dass** während der Druckbeaufschlagung des oberen Abschnittes (16) in einem ersten Zeitabschnitt der Kreislauf des Regeneriermittels (R) aufrechterhalten wird, und dass der Kreislauf unterbrochen wird, sobald das Flüssigkeitsniveau (N) im Unfiltratraum (2) unter einen vorbestimmbaren Wert absinkt oder sobald Gas durchtritt durch das Restfilterelement festgestellt wird.

10. Verfahren nach einem der Ansprüche 7 bis 9, **dadurch gekennzeichnet, dass** die Förderung des Regeneriermittels (R) im Kreislauf mit einer Leistung von mehr als 20 hl/m²h, vorzugsweise mehr als 100 hl/m²h erfolgt.

11. Verfahren nach einem der Ansprüche 7 bis 10, **dadurch gekennzeichnet, dass** nach Entleerung des Regeneriermittels (R) aus dem Kerzenfilter (1) das Stabilisiermittel (S) entfernt wird.

12. Verfahren nach einem der Ansprüche 7 bis 11, **dadurch gekennzeichnet, dass** das Restfilterelement (10) während der Stabilisierung und der Regenerierung nicht angeschwemmt bzw. durchspült wird, und dass das Restfilterelement (10) erst bei Beendigung des Regeneriervorgangs zum Entleeren des Reinigungsmediums (R) von diesem durchspült wird.

13. Verfahren nach einem der Ansprüche 7 bis 12 unter Verwendung eines Kerzenfilter nach einem der Ansprüche 1 bis 6.

## Claims

1. Candle filter (1) for the stabilization of beverages and liquid foodstuffs and for the regeneration of stabilizing agents (S) precoated on filter elements (6), having an unfiltrate space (2), a filtrate space (3), a perforated plate (4) which separates the unfiltrate space (2) from the filtrate space (3), the perforated plate (4) being provided with openings (5), and having filter elements (6) arranged in the unfiltrate space (2), hanging through the openings (5), **characterized in that**, in the unfiltrate space (2), completely underneath the filter elements (6), there is arranged at least one residue filter element (10) which has no horizontal surfaces, so that no deposition of stabilizing agent particles on the surface, which would make it more difficult for the regeneration agent to pass through, can take place on the surface as a result of precoating and/or sedimentation.

2. Candle filter according to Claim 1, **characterized in that** the residue filter element (10) is arranged in a wall (11) of the unfiltrate space (2).

3. Candle filter according to one of Claims 1 to 2, **characterized in that** the residue filter element (10) has at least one filter candle (12).

4. Cartidge filter according to Claim 3, **characterized in that** the residue filter element (10) comprises at least one horizontally arranged filter candle (12), if there is a plurality of filter candles (12), these preferably being connected to one another by a stabilizer (14).

5. Candle filter according to Claim 4, **characterized in that** the stabilizer (14) connects the filter candles (12) to one another at their ends (13).

6. Candle filter according to one of Claims 1 to 5, **characterized in that** at least one gas inlet (15) is arranged in an upper section (16) of the unfiltrate space (2), the gas inlet (15) being used to pressurize the section (16).

7. Method of stabilizing beverages or liquid foodstuffs, for regenerating stabilizing agents and for removing the regenerated stabilizing agents from the unfiltrate space (2) of a candle filter (1) having a filtrate space (3) with filter elements (6) arranged suspended approximately vertically in the unfiltrate space (2), on the surface of which elements (6) the stabilizing agents (S) are precoated, and having a residue filter element (10) arranged in the unfiltrate space (2) underneath the filter elements (6), **characterized in that**, in order to remove the regenerating agent (R), the unfiltrate space (2) is pressurized in an upper section (16) with a pressure which is higher in relation to the pressure in the filtrate space, and **in that** the regenerating agent (R) is removed by the residue filter element (10), the stabilizing agent (S) being retained on the surface of the filter elements (6) because of the pressure difference between the unfiltrate space (2) and the filtrate space (3).

8. Method according to Claim 7, **characterized in that** the filtrate space (3) is depressurized.

9. Method according to either of Claims 7 and 8, **characterized in that**, during the pressurization of the upper section (16) in a first time interval the circulation of the regenerating agent (R) is maintained, and **in that** the circulation is interrupted as soon as the liquid level (N) in the unfiltrate space (2) falls below a predeterminable value or as soon as the passage of gas through the residue filter element is determined.

10. Method according to one of Claims 7 to 9, **characterized in that** the delivery of the regenerating agent (R) in the circulation is carried out with an output of more than 20 hl/m²h, preferably more than 100 hl/m²h.

11. Method according to one of Claims 7 to 10, **characterized in that**, after the regenerating agent (R) has been removed from the candle filter (1), the stabilizing agent (S) is removed.

12. Method according to one of Claims 7 to 11, **characterized in that** the residue filter element (10) is neither precoated nor flushed through during the stabilization and the regeneration, and **in that** the residue filter element (10) is only flushed through by the cleaning medium (R) at the conclusion of the regeneration operation in order to empty the said cleaning medium (R).

13. Method according to one of Claims 7 to 12 using a candle filter according to one of Claims 1 to 6.

## Revendications

1. Filtre à bougies (1) pour la stabilisation de boissons et d'aliments liquides et pour la régénération de stabilisants (S) déposés sur des éléments filtrants (6), comprenant une chambre pour produit à filtrer (2), une chambre pour filtrat (3), une plaque perforée (4) qui sépare les chambres (2) et (3), ladite plaque perforée (4) étant pourvue d'ouvertures (5), et des éléments filtrants (6) qui sont suspendus à travers les ouvertures (5) dans la chambre pour produit à filtrer (2),
**caractérisé en ce qu'**il est prévu dans la chambre pour produit à filtrer (2), complètement au-dessous des éléments filtrants (6), au moins un élément filtrant résiduel (10) qui ne présente pas de surfaces horizontales, de sorte qu'il ne peut pas se former, sur la surface, d'accumulation de particules de stabilisant due à un dépôt et/ou à une sédimentation, ce qui rendrait difficile le passage du régénérant.

2. Filtre à bougies selon la revendication 1, **caractérisé en ce que** l'élément filtrant résiduel (10) est disposé dans une paroi (11) de la chambre pour produit à filtrer (2).

3. Filtre à bougies selon la revendication 1 ou 2, **caractérisé en ce que** l'élément filtrant résiduel (10) comporte au moins une bougie filtrante (12).

4. Filtre à bougies selon la revendication 3, **caractérisé en ce que** l'élément filtrant résiduel (10) se compose d'au moins une bougie filtrante (12) disposée à l'horizontale, étant précisé que s'il y a plusieurs bougies filtrantes (12), elles sont reliées entre elles de préférence grâce à un stabilisateur (14).

5. Filtre à bougies selon la revendication 4, **caractérisé en ce que** le stabilisateur (14) relie les bougies filtrantes (12) entre elles au niveau de leur extrémité (13).

6. Filtre à bougies selon l'une des revendications 1 à 5, **caractérisé en ce qu'**au moins une admission de gaz (15) est disposée dans la section supérieure (16) de la chambre pour produit à filtrer (2), cette admission de gaz (15) servant à solliciter la section (16) avec une pression.

7. Procédé pour stabiliser des boissons ou des aliments liquides, pour régénérer des stabilisants et pour évacuer les stabilisants régénérés de la chambre pour produit à filtrer (2) d'un filtre à bougies (1) comprenant une chambre pour filtrat (3), des éléments filtrants (6) qui sont suspendus à peu près à la verticale dans la chambre pour produit à filtrer (2) et sur la surface desquels sont déposés les stabilisants (S), et un élément filtrant résiduel (10) qui est disposé dans la chambre pour produit à filtrer (2), au-dessous des éléments filtrants (6),
**caractérisé en ce que** pour l'évacuation du régénérant (R), la chambre pour produit à filtrer (2) est sollicitée dans une section supérieure (6) avec une pression plus grande que celle de la chambre pour filtrat, et **en ce que** le régénérant (R) est évacué par l'élément filtrant résiduel (10), les stabilisants (S) étant retenus sur la surface des éléments filtrants (6) en raison de la différence de pression entre la chambre pour produit à filtrer (2) et la chambre pour filtrat (3).

8. Procédé selon la revendication 7, **caractérisé en ce que** la chambre pour filtrat (3) est soumise à une détente.

9. Procédé selon la revendication 7 ou 8, **caractérisé en ce que** pendant la mise sous pression de la section supérieure (16), le circuit du régénérant (R) est maintenu pendant une première période, et **en ce que** le circuit est interrompu dès que le niveau de liquide (N) dans la chambre pour produit à filtrer (2) baisse au-dessous d'une valeur apte à être prédéfinie ou dès que le passage de gaz à travers l'élément filtrant résiduel est constaté.

10. Procédé selon l'une des revendications 7 à 9, **caractérisé en ce que** le régénérant (R) est amené dans le circuit avec un débit de plus de 20 hl/m²h, de préférence de plus de 100 hl/m²h.

11. Procédé selon l'une des revendications 7 à 10, **caractérisé en ce qu'**après l'évacuation du régénérant (R) du filtre à bougies (1), le stabilisant (S) est évacué.

12. Procédé selon l'une des revendications 7 à 11, **caractérisé en ce que** l'élément filtrant résiduel (10) ne subit pas de dépôt ou de rinçage pendant la stabilisation et la régénération, et **en ce qu'**il n'est traversé par le produit de purification (R), pour l'évacuation de celui-ci, qu'une fois que la régénération est terminée.

13. Procédé selon l'une des revendications 7 à 12 avec utilisation d'un filtre à bougies selon l'une des revendications 1 à 6.
